# EUROPEAN PATENT APPLICATION

(11) **EP 3 208 076 A1**
(43) Date of publication of application: **23.08.2017**
(21) Application number: 16188450.7
(22) Date of filing: 13.09.2016
(51) Int. Cl.: B29C 67/00, B33Y 50/02, B33Y 10/00

(54) **THREE-DIMENSIONAL PRINTING METHOD AND THREE-DIMENSIONAL PRINTING APPARATUS THEREOF**

(30) Priority: 09.10.2015 CN 201510646481
(71) Applicant: XYZprinting, Inc., New Taipei City 22201 (TW); Kinpo Electronics, Inc., New Taipei City 22201 (TW); Cal-Comp Electronics & Communications Company Ltd., New Taipei City 22201 (TW)
(72) Inventor: Chang, Yu-Chuan, 22201 New Taipei City (TW); Ho, Kwan, 22201 New Taipei City (TW)
(74) Representative: Becker Kurig Straus

(57) **Abstract**

A 3D printing method and a 3D printing apparatus using the same are provided. The method includes following steps. A printing section is obtained according to printing information of a 3D object, where the printing section includes N-layer of casing layers and a single layer of a filling layer. A feeding rate of the printing head is respectively adjusted to a first value and a second value, where the second value is N times of the first value, and N is a positive integer greater than 1. The printing head is controlled to print the casing layers on a carrying surface of the printing platform according to the first value, and is controlled to print the filling layer according to the second value. A thickness of the single layer of the filling layer of the printing section is consistent with a total thickness of the N-layer of the casing layers.

## Description

### BACKGROUND OF THE INVENTION

### Field of the Invention

The invention relates to a printing method and a printing apparatus thereof, and particularly relates to a three-dimensional printing method and a three-dimensional printing apparatus thereof.

### Description of Related Art

Along with progress of computer-aided manufacturing (CAM), manufacturing industry has developed a three-dimensional (3D) printing technology, by which an original design conception can be quickly manufactured. The 3D printing technology is actually a general designation of a series of rapid prototyping (RP) techniques, and a basic principle thereof is additive manufacturing, where a RP machine is used to form sectional shapes of a workpiece in an X-Y plane through scanning, and intermittently shift by a layer thickness along a Z-axis, so as to form a 3D object. The 3D printing technology is not limited to any geometric shape, and the more complex the workpiece is, the more excellence the RP technology is demonstrated. The 3D printing technology can greatly save manpower and a processing time, and under a demand of the shortest time, a digital 3D object designed by software of 3D computer-aided design (CAD) can be truly presented as a physical part, which is not only touchable, a user can also actually feel a geometric curve of the physical part, and test assemblability of the physical part or even perform possible functional tests.

During the 3D printing process, a thickness of a printing layer determines an amount of a printing time and a level of printing quality. Generally, the lower the thickness of the printing layer is, the longer the printing time is, and the higher the printing quality is. Conversely, the higher the thickness of the printing layer is, the shorter the printing time is, and the lower the printing quality is. In other words, the time cost and the printing quality of the 3D printing are hard to be balanced in the conventional 3D printing technique. Therefore, it is one of the targets for related technicians to develop a 3D printing method and a 3D printing apparatus thereof capable of balancing the time cost and the printing quality.

### SUMMARY OF THE INVENTION

The invention is directed to a 3D printing method and a 3D printing apparatus thereof, by which different feeding rates are adopted to print casing layers and filling layers in all of printing layers, so as to decrease a printing time of 3D printing and meanwhile maintain good printing quality.

An embodiment of the invention provides a 3D printing method, which is adapted to a 3D printing apparatus to print a 3D object. The 3D printing apparatus has a printing head and a printing platform. The 3D printing method includes following steps. At least one printing section is obtained according to printing information of the 3D object. The printing section includes N-layer of casing layers and a single layer of a filling layer. A feeding rate of the printing head is respectively adjusted to a first value and a second value, where the second value is N times of the first value, and N is a positive integer greater than 1. The printing head is controlled to print the N-layer of the casing layers on a carrying surface of the printing platform according to the first value. The printing head is controlled to print the single layer of the filling layer on the carrying surface of the printing platform according to the second value. A thickness of the single layer of the filling layer of the printing section is consistent with a total thickness of the N-layer of the casing layers.

Another embodiment of the invention provides a 3D printing apparatus, which is adapted to print a 3D object. The 3D printing apparatus includes a printing head, a printing platform and a control unit. The printing platform has a carrying surface. The control unit is coupled to the printing head. The control unit obtains at least one printing section according to printing information of the 3D object, where the printing section includes N-layer of casing layers and a single layer of a filling layer. The control unit respectively adjusts a feeding rate of the printing head to a first value and a second value, where the second value is N times of the first value, and N is a positive integer greater than 1. The control unit controls the printing head to print the N-layer of the casing layers on a carrying surface of the printing platform according to the first value. The control unit controls the printing head to print the single layer of the filling layer on the carrying surface of the printing platform according to the second value. A thickness of the single layer of the filling layer of the printing section is consistent with a total thickness of the N-layer of the casing layers.

According to the above description, in the 3D printing method and the 3D printing apparatus thereof provided by the invention, different feeding rates are adopted to print the casing layers and the filling layer with different thickness. To be specific, the thickness of the filling layer is N times of the casing layer, and the 3D printing method and the 3D printing apparatus thereof adopt different feeding rates to respectively print the casing layers and the filling layer, so as to achieve an effect of decreasing the printing time while considering the printing quality.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram illustrating a working situation of a 3D printing apparatus.
FIG. 2 is a schematic diagram of a 3D printing apparatus according to an embodiment of the invention.
FIG. 3 is a flowchart illustrating a 3D printing method according to an embodiment of the invention.
FIG. 4 is a schematic diagram of the 3D printing according to an embodiment of the invention.

### DESCRIPTION OF EMBODIMENTS

The present invention will now be described more fully with reference to the accompanying drawings, in which exemplary embodiments of the invention are shown. The terms used herein such as "above", "below", "front", "back", "left"; "right", "bottom", "top", etc., are for the purpose of describing directions in the figures only and are not intended to be limiting of the invention. Moreover, in the following embodiments, the same or similar components are indicated by the same or similar referential numbers.

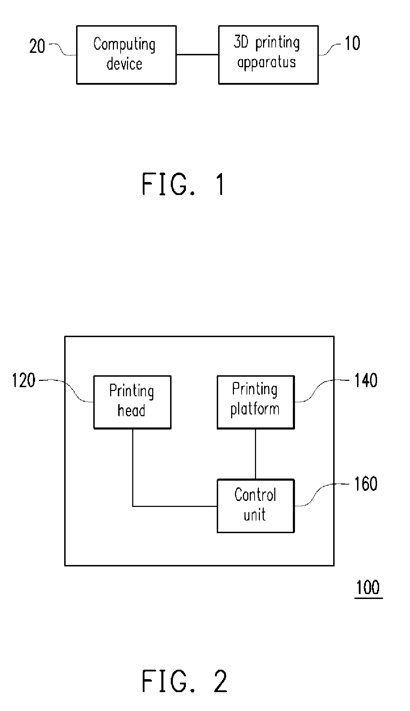

FIG. 1 is a schematic diagram illustrating a working situation of a 3D printing apparatus. Referring to FIG. 1, the 3D printing apparatus 10 is adapted to print a 3D object according to printing information provided by a computing device 20. Generally, the computing device 20 is, for example, an electronic device having computation capability such as a desktop computer, a notebook, a smart phone or a table personal computer (PC), etc. Regarding the 3D printing apparatus 10 adopting a fused deposition modelling (FDM) technique, the computing device 20, for example, slices the 3D object into a plurality of printing layers from bottom to top by using slice software, and provides the printing information of the printing layers to the 3D printing apparatus 10. In detail, each of the printing layers can be divided into a casing layer and a filling layer. The filling layer serves as an internal structure of the 3D object, and a printing density and a printing type of the filling layer are adjustable, and the printing density and the printing type may directly or indirectly influence a structure strength of the 3D object. The 3D printing apparatus 10 prints each of the printing layers layer-by-layer according to the printing information of each of the printing layers, and stacks the printing layers to complete the 3D object.

A 3D printing method and a 3D printing apparatus provided by the invention further print the 3D object according to printing information of the casing layer and the filling layer with different thickness, other than printing the same only according to the printing information of each printing layer. FIG. 2 is a schematic diagram of a 3D printing apparatus according to an embodiment of the invention. Referring to FIG. 2, the 3D printing apparatus 100 includes a printing head 120, a printing platform 140 and a control unit 160. The printing head 120 is, for example, a melting head, which heats a filament formed by a laminated material, and sprays the laminated material in a melting state to print the casing layers and the filling layer.

The printing platform 140 has a carrying surface, and the 3D printing apparatus 100 prints layer-by-layer on the carrying surface to complete the 3D object. The control unit 160 is coupled to the printing head 120, and controls the printing head to conduct 3D printing according to the printing information. The control unit 160 is, for example, a central processing unit (CPU), a programmable microprocessor, a programmable controller, an application specific integrated circuits (ASIC), other similar device or a combination of the above devices.

In an embodiment of the invention, the 3D printing apparatus 100 further includes a transmission interface (not shown), which is configured to receive the printing information transmitted by other computing device, and is, for example, complied with a serial advanced technology attachment (SATA) standard, a universal serial bus (USB) standard, a parallel advanced technology attachment (PATA) standard or other suitable standard.

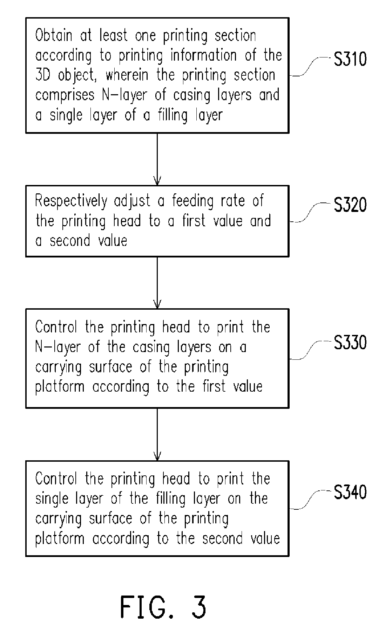

FIG. 3 is a flowchart illustrating a 3D printing method according to an embodiment of the invention. The 3D printing method shown in FIG. 3 is adapted to the 3D printing apparatus 100 of FIG. 2, though the invention is not limited thereto. Referring to FIG. 2 and FIG. 3, the control unit 160 of the 3D printing apparatus 100, for example, receives the printing information of the 3D object through the transmission interface, and obtains at least one printing section according to the printing information of the 3D object. The printing section includes N-layer of the casing layers and a single layer of the filling layer (step S310). To be specific, in the present embodiment, an external computing device (not shown) identifies the 3D object to obtain the printing information of the 3D object. The printing information, for example, relates to a plurality of printing sections of the 3D object, and each of the printing sections, for example, includes the N-layer of the casing layers and the single layer of the filing layer. In other embodiments, the printing section, for example, only includes a single layer or N-layer of the casing layers. It should be noted that N is a positive integer greater than 1. The 3D printing device 100 receives the aforementioned printing information, and obtains at least one printing section therefrom.

In other words, the aforementioned casing layers and the aforementioned filling layer correspond to a part of the printing layers of the 3D object, and a thickness of the single layer of the filling layer is consistent with a total thickness of the N-layer of the casing layers. It should be noted that, in another embodiment of the invention, the external computing device (not shown) may only transmit a design of the 3D object to the 3D printing apparatus 100, and the control unit 160 of the 3D printing apparatus 100 performs the layer slicing and identification to obtain the at least one printing section.

After the control unit 160 obtains the at least one printing section, the control unit 160 respectively adjusts a feeding rate of the printing head to a first value and a second value (step S230). It should be noted that the second value is N times of the first value, and N is a positive integer greater than 1. The control unit 160 controls the printing head 120 to print the N-layer of the casing layers on the carrying surface of the printing platform 140 according to the first value (step S330). On the other hand, the control unit 160 controls the printing head 120 to print the single layer of the filling layer according to the second value (step S340). It should be noted that, in the present embodiment, the N-layer of the casing layers are printed in preference to the single layer of the filling layer, and in the printing section, the thickness of the single layer of the filling layer of the printing section is consistent with the total thickness of the N-layer of the casing layers.

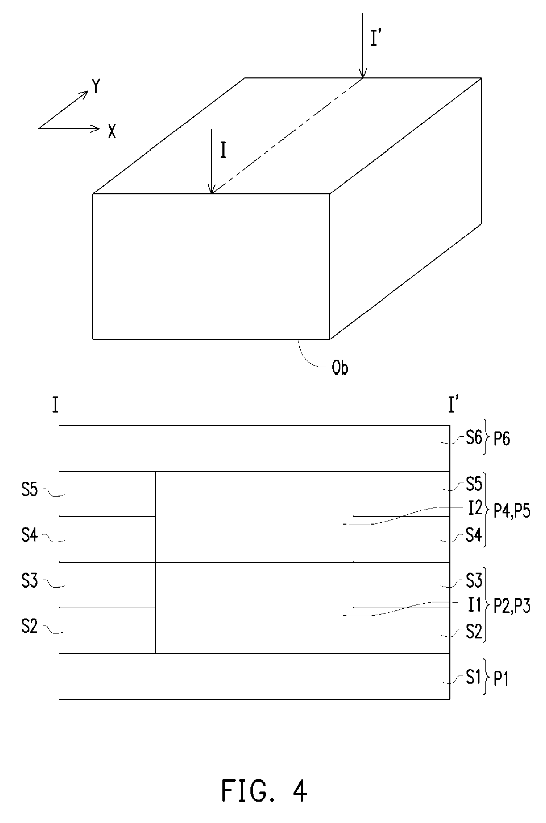

FIG. 4 is a schematic diagram of the 3D printing according to an embodiment of the invention. In detail, FIG. 4 illustrates a 3D object Ob and a cross section I-I' thereof. Referring to FIG. 2, FIG. 3 and FIG. 4, original printing layers P2 and P3 are further divided into casing layers S2 and S3 and a filling layer I1 after being identified by the computing device, and are taken as a same printing section. In other words, in the present embodiment, N is 2, though the invention is not limited thereto. The control unit 160 first adjusts the feeding rate of the printing head 120 to the first value according to the related printing information of the aforementioned printing section (the casing layers S2 and S3 and the filling layer I1), and controls the printing head 120 to print the casing layers S2 and S3 layer-by-layer on an X-Y plane. After printing of the casing layers S2 and S3 is completed, the control unit 160 adjusts the feeding rate of the printing head 120 to the second value, and controls the printing head 120 to print the filling layer I1 on the X-Y plane. In the present embodiment, the X-Y plane corresponds to the carrying surface of the printing platform 140.

The total thickness of the casing layers S2 and S3 is consistent with the thickness of the filling layer I1, and the two thickness are all complied with a total thickness of the printing layers P2 and P3. The feeding rate of the printing head 120 is a throughput of the printing head 120 in a unit time (for example, 1 second). In other words, the feeding rate of the printing head 120 is a total amount of the laminated material output by the printing head 120 within the unit time. In the present embodiment, the thickness of the filling layer I1 is twice of the thickness of each of the casing layers S2 and S3, and the feeding rate of the printing head is accordingly adjusted such that the second value is twice of the first value. It can be deduced that if the thickness of the filling layer is N times of the casing layer, the second value is N times of the first value, where N is a positive integer greater than 1. To be specific, the casing layer generally requires a fine operation to maintain an appearance of the 3D object, so that the control unit 160 controls the printing head 120 to print the casing layer with a smaller thickness. Comparatively, the control unit 160 controls the printing head 120 to print the filling layer with a larger thickness, so as to save a printing time.

After printing of the casing layers S2 and S3 and the filling layer I1 corresponding to the printing layers P2 and P3 is completed, the 3D printing apparatus 100 obtains another printing section, for example, a printing section including casing layers S4 and S5 and a filling layer I2 and re-executes the 3D printing flow shown in FIG. 3. It should be noted that the casing layers S4 and S5 and the filling layer I2 correspond to original printing layers P4 and P5, and the printing layers P4 and P5 cover on the printing layers P2 and P3. In other words, the 3D printing apparatus 100 sequentially obtains the printing sections (each printing section includes the casing layers and the filling layer) corresponding to different printing layers, and prints the different parts of the 3D object Ob from bottom to top.

In an embodiment of the invention, the 3D printing method further includes steps of printing a top printing layer and a bottom printing layer of the 3D object. Referring to FIG. 4, in the present embodiment the bottom printing layer P1 and the top printing layer P6 are respectively the single layer of the casing layers S1 and S6, though the invention is not limited thereto. In other embodiments, the printing layers P1 and P6 can be respectively multi-layer of the casing layers.

The 3D printing apparatus 100, for example, obtains the printing section corresponding to the printing layer P1 through the transmission interface, where the printing section includes the bottom casing layer S1. The control unit 160 adjusts the feeding rate of the printing head 120 to the first value according to the related printing information of the bottom casing layer S1, and controls the printing head 120 to print the bottom casing layer S1 on the carrying surface of the printing platform 140 according to the first value.

On the other hand, the 3D printing apparatus 100, for example, obtains the printing section corresponding to the printing layer P6 through the transmission interface, where the printing section includes the top casing layer S6. The control unit 160 adjusts the feeding rate of the printing head 120 to the first value according to the related printing information of the top casing layer S6, and controls the printing head 120 to print the top casing layer S6 on the carrying surface of the printing platform 140 according to the first value. It should be noted that, in the present embodiment, the 3D printing apparatus 100 prints the 3D object Ob according a sequence of the printing layer P1, the printing layers P2 and P3, the printing layers P4 and P5 and the printing layer P6.

In summary, in the 3D printing method and the 3D printing apparatus thereof provided by the invention, different feeding rates are adopted to print the casing layers and the filling layer with different thickness. To be specific, the thickness of the filling layer is N times of the casing layer, and the 3D printing method and the 3D printing apparatus thereof adopt a lower feeding rate to print the casing layers, and adopt a higher feeding rate to print the filling layer, so as to achieve an effect of decreasing the printing time while considering the printing quality.

## Claims

1. A three-dimensional (3D) printing method, adapted to a 3D printing apparatus (10, 100) to print a 3D object (Ob), wherein the 3D printing apparatus (10, 100) has a printing head (120) and a printing platform (140), the 3D printing method being **characterized in that** the method comprising:
obtaining at least one printing section according to printing information of the 3D object (Ob), wherein the printing section comprises N-layer of casing layers (S1, S2, S3, S4, S5, S6) and a single layer of a filling layer (I1, I2) (step S310);
respectively adjusting a feeding rate of the printing head (120) to a first value and a second value (step S320), wherein the second value is N times of the first value, and N is a positive integer greater than 1;
controlling the printing head (120) to print the N-layer of the casing layers (S1,S2, S3, S4, S5, S6) on a carrying surface of the printing platform (140) according to the first value (step S330); and
controlling the printing head (120) to print the single layer of the filling layer (I1, I2) on the carrying surface of the printing platform (140) according to the second value (step S340), wherein a thickness of the single layer of the filling layer (I1, I2) of the printing section is consistent with a total thickness of the N-layer of the casing layers (S1, S2, S3, S4, S5, S6).

2. The 3D printing method as claimed in claim 1, wherein the feeding rate is a throughput of the printing head (120) in a unit time.

3. The 3D printing method as claimed in claim 1, wherein the casing layers (S1, S2, S3, S4, S5, S6) are printed in preference to the filling layer (I1, I2).

4. The 3D printing method as claimed in claim 1, wherein the printing head (120) is a melting head, and the melting head heats a filament formed by a laminated material, and sprays the laminated material in a melting state to print the casing layers (S1, S2, S3, S4, S5, S6) and the filling layer (I1, I2).

5. The 3D printing method as claimed in claim 1, further comprising:
obtaining printing information of a bottom casing layer (S1); and
controlling the printing head (120) to print the bottom casing layer (S1) on the carrying surface of the printing platform (140) according to the first value, wherein the bottom casing layer (S1) corresponds to the casing layer (S1) at the bottom of the 3D object (Ob).

6. The 3D printing method as claimed in claim 1, further comprising:
obtaining printing information of a top casing layer (S6); and
controlling the printing head (120) to print the top casing layer (S6) on the carrying surface of the printing platform (140) according to the first value, wherein the top casing layer (S6) corresponds to the casing layer (S6) at the top of the 3D object (Ob).

7. A 3D printing apparatus (10, 100), adapted to print a 3D object (Ob), the 3D printing apparatus (10, 100) being **characterized in that** the 3D printing apparatus (10, 100) comprising:
a printing head (120);
a printing platform (140), having a carrying surface; and
a control unit (160), coupled to the printing head (120), wherein the control unit (160) obtains at least one printing section according to printing information of the 3D object (Ob), wherein the printing section comprises N-layer of casing layers (S1, S2, S3, S4, S5, S6) and a single layer of a filling layer (I1, I2), the control unit (160) respectively adjusts a feeding rate of the printing head (120) to a first value and a second value, wherein the second value is N times of the first value, and N is a positive integer greater than 1, the control unit (160) controls the printing head (120) to print the N-layer of the casing layers (S1, S2, S3, S4, S5, S6) on a carrying surface of the printing platform (140) according to the first value, and the control unit (160) controls the printing head (120) to print the single layer of the filling layer (I1, I2) on the carrying surface of the printing platform (140) according to the second value,
wherein a thickness of the single layer of the filling layer (I1, I2) of the printing section is consistent with a total thickness of the N-layer of the casing layers (S1, S2, S3, S4, S5, S6).

8. The 3D printing apparatus (10, 100) as claimed in claim 7, wherein the feeding rate is a throughput of the printing head (120) in a unit time.

9. The 3D printing apparatus (10, 100) as claimed in claim 7, wherein the casing layers (S1,S2, S3, S4, S5, S6) are printed in preference to the filling layer (I1, I2).

10. The 3D printing apparatus (10, 100) as claimed in claim 7, wherein the printing head (120) is a melting head, and the melting head heats a filament formed by a laminated material, and sprays the laminated material in a melting state to print the casing layers (S1, S2, S3, S4, S5, S6) and the filling layer (I1, I2).

11. The 3D printing apparatus (10, 100) as claimed in claim 7, wherein the control unit (160) obtains printing information of a bottom casing layer (S1), and controls the printing head (120) to print the bottom casing layer (S1) on the carrying surface of the printing platform (140) according to the first value, wherein the bottom casing layer (S1) corresponds to the casing layer (S1) at the bottom of the 3D object (Ob).

12. The 3D printing apparatus (10, 100) as claimed in claim 7, wherein the control unit (160) obtains printing information of a top casing layer (S6), and controls the printing head (120) to print the top casing layer (S6) on the carrying surface of the printing platform (140) according to the first value, wherein the top casing layer (S6) corresponds to the casing layer (S6) at the top of the 3D object (Ob).
